# EUROPÄISCHE PATENTSCHRIFT

(11) **EP 3 718 461 B1**
(45) Veröffentlichungstag und Bekanntmachung des Hinweises auf die Patenterteilung: **21.09.2022**
(21) Anmeldenummer: 20167690.5
(22) Anmeldetag: 02.04.2020
(51) Int. Cl.: A47L 15/42, A47L 15/48

(54) **GESCHIRRSPÜLMASCHINE, INSBESONDERE HAUSHALTSGESCHIRRSPÜLMASCHINE**
DISHWASHER, IN PARTICULAR A DOMESTIC DISHWASHING MACHINE
LAVE-VAISSELLE, EN PARTICULIER LAVE-VAISSELLE ÉLECTROMÉNAGER

(30) Priorität: 05.04.2019 DE 102019108965; 17.02.2020 DE 102020104060
(43) Veröffentlichungstag der Anmeldung: 07.10.2020
(73) Patentinhaber: Miele & Cie. KG, 33332 Gütersloh (DE)
(72) Erfinder: Wolf, Cornelius, 33739 Bielefeld (DE); Chluba, Nils, 31688 Nienstädt (DE); Stanke, Benjamin, 33604 Bielefeld (DE); Bertram, Andre, 33609 Bielefeld (DE); Dahms, Tobias, 30519 Hannover (DE); Schröder, Nils, 33611 Bielefeld (DE); Steinmeier, Ralph, 32052 Herford (DE); Kornfeld, André, 33378 Rheda-Wiedenbrück (DE)

(56) Entgegenhaltungen:
- EP-A1- 3 375 345
- WO-A1-2018/215331
- DE-A1- 10 356 785
- DE-A1-102018 104 946

## Beschreibung

Die Erfindung betrifft eine Geschirrspülmaschine, insbesondere in der Ausgestaltung einer Haushaltsgeschirrspülmaschine, mit einem einen Spülraum bereitstellenden Spülbehälter, der der Aufnahme von zu reinigendem Spülgut dient, und mit einer Wärmepumpeneinrichtung, die einen Verdampfer aufweist, der innerhalb eines mit Wasser befüllten Tanks angeordnet ist. Ferner betrifft die Erfindung ein Verfahren zum Betrieb einer Geschirrspülmaschine.

Geschirrspülmaschinen der eingangs genannten Art sind aus dem Stand der Technik an sich wohl bekannt, weshalb es eines gesonderten druckschriftlichen Nachweises an dieser Stelle dem Grunde nach nicht bedarf. Es sei deshalb auch nur beispielhaft auf die EP 3 375 345 A1 verwiesen, die eine gattungsgemäße Geschirrspülmaschine betrifft.

Eine Geschirrspülmaschine der gattungsgemäßen Art verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels ich drehender Sprüharme.

Um den Energieverbrauch insbesondere bei einem Aufheizen der Spülflotte zu reduzieren, verfügt eine Geschirrspülmaschine der gattungsgemäßen Art über eine Wärmepumpeneinrichtung.

Eine solche Wärmepumpeneinrichtung kann entweder als Luft-Wasser-Wärmepumpeneinrichtung oder als Wasser-Wasser-Wärmepumpeneinrichtung ausgebildet sein. Die gattungsgemäße Geschirrspülmaschine nach der EP 3 375 345 A1 verfügt über eine Wasser-Wasser-Wärmepumpeneinrichtung.

Eine Wasser-Wasser-Wärmepumpeneinrichtung verfügt in an sich bekannter Weise über einen Verdampfer, einen Verdichter, einen Verflüssiger und einen diese Komponenten strömungstechnisch miteinander verbindenden Strömungs- oder Umwälzkreislauf. Dabei dient der Verflüssiger als Wärmetauscher, mittels dem Wärmeenergie von einem im Strömungskreislauf der Wärmepumpeneinrichtung umgewälzten Arbeitsmedium auf die Spülflotte übertragen wird.

Der Verdampfer einer Wasser-Wasser-Wärmepumpeneinrichtung ist innerhalb eines vorzugsweise mit Wasser befüllten Tanks angeordnet. Im bestimmungsgemäßen Verwendungsfall der Wärmepumpeneinrichtung wird dem im Tank bevorrateten Wasser Wärmeenergie entzogen, die auf das im Strömungskreislauf der Wärmepumpeneinrichtung geführte Arbeitsmedium übertragen und so zur Aufheizung der Spülflotte genutzt wird. Der Wärmeenergieentzug aus dem Wasser führt zu einer Abkühlung des Wassers, bis hin zu einem Einfrieren desselben.

Eine bestimmungsgemäße Verwendung der Geschirrspülmaschine unter gleichzeitiger Nutzung einer Wasser-Wasser-Wärmepumpeneinrichtung ist energetisch nur dann sinnvoll, wen das im Tank der Wärmepumpeneinrichtung bevorratete Wasser eine gewisse Mindesttemperatur aufweist. Sollte dieses nach einer vorangegangenen Geschirrspülmaschinenbenutzung noch zu kühl oder sogar gefroren sein, muss mit einem bestimmungsgemäßen Einsatz der Geschirrspülmaschine bis zum Erreichen der Mindesttemperatur gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich.

Um diesem Problem zu begegnen ist mit der EP 3 375 345 A1 vorgeschlagen worden, dass der Tank an einen Luftführungskanal und an einen Luftabführungskanal strömungstechnisch angeschlossen ist, wobei der Luftzuführungskanal und der Luftabführungskanal jeweils anderendseitig in den Spülraum einmünden. Diese Konstruktion ermöglicht es, im Bedarfsfall über den Luftzuführungskanal Luft aus dem Spülraum heraus in den Tank zu fördern. Dabei gelangt die Luft in unmittelbarem Kontakt mit dem Tankinhalt, nämlich dem darin bevorrateten flüssigen oder teilweise gefrorenen bzw. eisförmigen Wasser; sie strömt also unmittelbar an der Wasser- und/oder Eisoberfläche entlang. Der Luftabführungskanal dient indes dazu, aus dem Tank stammende Luft zurück in den Spülraum zu fördern. Im Ergebnis ist so ein Umluftkreislauf geschaffen, der im Betriebsfall eine Luftumwälzung gestattet, und zwar aus dem Spülraum heraus durch den Luftzuführungskanal in den Tank und von dort aus durch den Luftabführungskanal zurück in den Spülraum. Im Betriebsfall kann so Wärmeenergie aus der vom Spülbehälter beherbergten Luft auf das im Tank befindliche Wasser übertragen werden, was zu einer schnelleren Regeneration des Wassers, mithin zu einem schnelleren Anheben der Temperatur des Wassers auf die für einen bestimmungsgemäßen Betrieb der Wärmepumpeneinrichtung erforderlichen Mindesttemperatur führt.

Obgleich sich die aus der EP 3 375 345 A1 bekannte Konstruktion im alltäglichen Praxiseinsatz bewährt hat, besteht Verbesserungsbedarf. Insbesondere ist es angestrebt, eine noch effizientere Regernation des im Tank bevorrateten Wasser zu erzielen, so dass die Standzeit zwischen zwei aufeinander nachfolgenden Spülprogrammen unter jeweils bestimmungsgemäßer Verwendung der Wärmepumpeneinrichtung noch weiter verkürzt werden kann. Es ist deshalb die **Aufgabe** der Erfindung, eine Geschirrspülmaschine der eingangs genannten Art dahingehend weiterzuentwickeln, dass konstruktiv eine noch weiter verbesserte Tankregeneration ermöglicht ist.

Zur **Lösung** dieser Aufgabe wird mit der Erfindung eine Geschirrspülmaschine der eingangs genannten Art vorgeschlagen, die sich auszeichnet durch ein Umluftsystem, das einen Luftführungskreislauf und eine innerhalb des Luftführungskreislaufes angeordnete Ventilatoreinheit aufweist, wobei der Luftführungskreislauf an einer Außenoberfläche sowohl des Spülbehälters als auch des Tanks zumindest abschnittsweise vorbeigeführt ist, so dass im Betriebsfall der Ventilatoreinheit der Spülbehälter und der Tank zumindest abschnittsweise luftumspült sind, wobei die im Luftführungskreislauf geführte Luft in unmittelbarem Kontakt mit den Außenoberflächen des Spülbehälters und des Tanks steht.

In Abkehr zum Stand der Technik nach der EP 3 375 345 A1 ist konstruktiv nicht eine Luftführung durch den Spülbehälter und den Tank hindurch, sondern um den Tank und den Spülbehälter herum vorgesehen. Zu diesem Zweck verfügt die erfindungsgemäße Geschirrspülmaschine über ein Umluftsystem mit einem Luftführungskreislauf, der sowohl an einer Außenoberfläche des Spülbehälters als auch an einer Außenoberfläche des Tanks jeweils zumindest abschnittsweise vorbeigeführt ist. Im Betriebsfall sind damit sowohl der Spülbehälter als auch der Tank zumindest abschnittsweise luftumspült, wobei die im Luftführungskreislauf geführte Luft in einem unmittelbaren Kontakt mit den jeweiligen Außenoberflächen des Spülbehälters einerseits und des Tanks andererseits steht.

Die erfindungsgemäße Konstruktion erweist sich gegenüber der Konstruktion nach der EP 3 375 345 A1 insbesondere aus folgenden Gründen als vorteilhaft. Die zur Verfügung stehende Wirkoberfläche zum Wärmeaustausch ist signifikant vergrößert. So dient bei der Konstruktion nach der EP 3 375 345 A1 lediglich die Wasseroberfläche des im Tank bevorrateten Wasser als Wärmetauscherfläche. In Abkehr hierzu sieht die erfindungsgemäße Ausgestaltung eine Luftumspülung des Tanks vor, womit auch die Seitenflächen des Tanks für einen Wärmetausch mitgenutzt werden. Die hierdurch erreichte Vergrößerung der wirksamen Oberfläche zum Wärmetausch führt in vorteilhafter Weise zu einer signifikant verkürzten Regenerationszeit. Das im Tank bevorratete Wasser wird damit sehr viel schneller auf die für eine bestimmungsgemäße Verwendung der Wärmepumpeneinrichtung benötigte Mindesttemperatur gebracht.

Im bestimmungsgemäßen Verwendungsfall der Wärmepumpeneinrichtung lässt es sich auch bei einer Dämmung des Tanks in der Regel nicht vermeiden, dass sich an der Außenoberfläche des Tanks Kondensat bildet. Die Luftumspülung nach der erfindungsgemäßen Konstruktion sorgt in vorteilhafter Weise zu einer Abtrocknung eines solchen Kondensats, womit sich in Abkehr zum Stand der Technik nicht ungewollt Kondensatpfützen im Sockelbereich der Geschirrspülmaschine ausbilden können.

Ein weiterer Vorteil der erfindungsgemäßen Ausgestaltung liegt darin, dass kein Feuchtigkeitseintrag aus dem Spülraum in den Tank stattfinden kann. Der Wasserspiegel im Tank kann damit konstant und so auf einem optimierten Arbeitsniveau gehalten werden.

Bei der vorbekannten Konstruktion nach der EP 3 375 345 A1 besteht zudem die Problematik, dass es insbesondere bei einem Schiefstellen der Geschirrspülmaschine dazu kommen kann, das im Tank bevorratetes Wasser ungewollt in den Luftzuführungskanal und/oder den Luftabführungskanal einschwappen kann. Um dies verhindern, sind nach der Konstruktion der EP 3 375 345 A1 entsprechende Schutzmaßnahmen erforderlich. Diese können bei der Konstruktion nach der Erfindung vollends entfallen, da der Tank nicht von Luft durchströmt, sondern von Luft umströmt wird.

Mit der erfindungsgemäßen Ausgestaltung wird insgesamt ein Umluftsystem bereitgestellt, das eine Luftumspülung des Spülbehälters einerseits und des Tanks andererseits ermöglicht. Der infolge eines bestimmungsgemäß durchgeführten Spülprogramms und/oder Spülprogrammschritts aufgewärmte Spülbehälter erwärmt die ihn umspülende Luft. Die so aufgewärmte Luft wird im Umluftkreislauf umgewälzt und umspült auch den Tank der Wärmepumpeneinrichtung. Es findet so eine Erwärmung des Tanks und damit auch des davon bevorrateten Wasser statt. Die infolge der Tankerwärmung abgekühlte Luft gelangt im Umluftsystem wieder zurück zum Spülbehälter, wo eine erneute Erwärmung stattfindet. Mittels der Ventilatoreinheit wird die Luft im Luftführungskreislauf des Umluftsystems im Kreislauf, d.h. im Umwälzbetrieb geführt, so dass ein stetiger Wärmeübertrag zwischen Spülbehälter und Luft einerseits und Luft und Tank andererseits stattfindet. Da im Vergleich zum Stand der Technik insbesondere nach der EP 3 375 345 A1 eine insgesamt vergrößerte Wärmetauscherfläche zur Verfügung steht, kann ein effizienterer und damit schnellerer Wärmeeintrag in das vom Tank bevorratete Wasser mit dem Ziel einer schnelleren Aufheizung desselben auf die für einen bestimmungsgemäßen Betrieb der Wärmepumpeneinrichtung erforderlichen Mindesttemperatur erreicht werden.

Gemäß einem weiteren Merkmal der Erfindung ist vorgesehen, dass der Luftführungskreislauf zumindest teilweise durch ein den Spülbehälter und den Tank beherbergendes Gehäuse begrenzt ist.

Eine Geschirrspülmaschine der gattungsgemäßen Art verfügt typischerweise über ein Gehäuse, das sowohl den Spülbehälter als auch den Tank beherbergt. Das Gehäuse stellt zu diesem Zweck einen Volumenraum bereit, der durch den Spülbehälter, den Tank und weitere Baukomponenten der Geschirrspülmaschine nicht vollends ausgefüllt ist. Dieser Volumenraum wird in der einfachsten Ausführung der Erfindung als Luftführungskreislauf genutzt. Dabei ist der Luftführungskreislauf durch das den Spülbehälter und den Tank beherbergende Gehäuse zumindest teilweise begrenzt. Sofern die Geschirrspülmaschine als ein in eine Küchenzeile zu integrierendes Gerät ausgebildet ist und ein nach oben offenes Gehäuse aufweist, ist der Luftführungskreislauf durch eine das Gehäuse oberseitig begrenzende Abdeckung, beispielsweise eine Arbeitsplatte einer Küchenzeile begrenzt.

Für eine optimierte Luftführung insbesondere im Sockelbereich der Geschirrspülmaschine ist es bevorzugt, zumindest im Sockelbereich der Geschirrspülmaschine eine Luftführung durch eine entsprechende Kanalführung vorzusehen. So ist es insbesondere bevorzugt, eine entsprechende Kanalführung zur Umlenkung der Luft aus dem Sockelbereich in den rückwärtigen und/oder seitlichen Bereich des Spülbehälters vorzusehen.

Gemäß einem weiteren Merkmal der Erfindung ist vorgesehen, dass der Luftführungskreislauf den Spülbehälter und/oder den Tank umlaufend oder zumindest teilweise umlaufend umgibt. Der Luftführungskreislauf ist mithin vorzugsweise derart ausgebildet, dass zumindest eine umlaufende Umspülung sowohl des Spülbehälters als auch des Tanks von einer ersten Seite, beispielsweise der jeweiligen Rückseite zu einer zweiten, der ersten gegenüberliegenden Seite beispielsweise zur jeweiligen Vorderseite und wieder zurück vorgesehen ist. Im bestimmungsgemäßen Verwendungsfall werden insbesondere eine erste Seite (beispielsweise die Rückseite), die Oberseite, eine zweite, der ersten Seite gegenüberliegende Seite (beispielsweise die Vorderseite) sowie die Unterseite sowohl des Spülbehälters als auch des Tanks luftumspült. Zudem kann gemäß einer weiteren Ausführungsform der Erfindung ein Luftführungskreislauf vorgesehen sein, demgemäß auch die Seitenwände mit Luft umspült werden, insbesondere die Seitenwände des Tanks. Die Wärmeübertragungsfläche ist so noch weiter vergrößert, was die Wärmeübertragung vom Spülbehälter auf das im Tank befindliche Wasser noch weiter optimiert.

Gemäß einem weiteren Merkmal der Erfindung ist vorgesehen, dass der Tank vollflächig oder zumindest weitgehend vollflächig luftumspült innerhalb des Luftführungskanals angeordnet ist. Damit ist die Wärmeaustauscherfläche bezüglich des Tanks optimiert, so dass ein effizienter Wärmeübergang von der vom Spülbehälter stammenden, aufgewärmten Luft auf das im Tank bevorratete Wasser stattfinden kann.

Gemäß einem weiteren Merkmal der Erfindung ist vorgesehen, dass der Tank einen Behälter und eine behälteraußenseitig ausgebildete Dämmung aufweist, wobei die Dämmung die Außenseite des Tanks bereitstellt.

Zur Vermeidung von Kondensatausbildung an der Außenseite des Tanks ist es bevorzugt, den Tank mit einer Dämmung auszurüsten. In diesem Fall verfügt der Tank über einen Behälter, der der eigentlichen Wasserbevorratung dient, und eine Dämmung, die den Behälter behälteraußenseitig umgibt. Dabei stellt der mit Dämmung ausgerüstete Behälter den Tank dar, wobei die Außenseite des Tanks durch die Dämmung bereitgestellt ist. Dabei kann je nach Wetterlage, d.h. des in der Umgebungsatmosphäre der Geschirrspülmaschine herrschenden Klimas trotz Dämmung des Tanks nicht verhindert werden, dass sich unerwünschtes Kondensat an der Tankaußenseite bildet. Dank der erfindungsgemäßen Luftumspülung des Tanks wird eine Kondensattrocknung erreicht, so dass ein unerwünschtes Ansammeln von Kondensat im Sockelbereich der Geschirrspülmaschine minimiert, unter Umständen sogar vermieden ist.

Gemäß einem weiteren Merkmal der Erfindung ist vorgesehen, dass der Luftführungskanal zumindest abschnittsweise durch Luftführungsmittel, insbesondere Bleche oder Kunststoffprofile begrenzt ist. Gemäß dieser Ausführungsform kommen insbesondere im Sockelbereich der Geschirrspülmaschine Luftführungskanäle zum Einsatz, die den Luftführungskreislauf begrenzen. Derartige Luftführungskanäle sind vorzugsweise aus Blech, insbesondere Metallblech, oder Kunststoff gebildet. Von Vorteil derartiger Luftführungskanäle ist eine zielgerichtete Strömung der im Luftführungskreislauf umgewälzten Luft. Eine solche Luftzwangsführung ist insbesondere im Sockelbereich der Geschirrspülmaschine von Vorteil, da es hier ansonsten aufgrund der im Sockelbereich befindlichen Baukomponenten der Geschirrspülmaschine zu unkontrollierten Luftströmungen und Verwirbelungen kommen kann. Eine zielgerichtete Luftführung mittels eines entsprechenden Luftführungskanals schafft hier Abhilfe, was auch zu einem optimierten Wärmeeintrag in das vom Tank bevorratete Wasser führt.

Gemäß einem weiteren Merkmal der Erfindung ist vorgesehen, dass der Spülbehälter außenseitig in den Luftführungskanal hineinragende Rippen trägt. Mittels derartiger Rippen ist eine Vergrößerung der vom Spülbehälter bereitgestellten Wärmeübertragungsfläche geschaffen. Es ist so ein verbesserter Wärmeeintrag vom aufgeheizten Spülbehälter in die den Spülbehälter umspülende Luft erreicht.

Gemäß einem weiteren Merkmal der Erfindung ist vorgesehen, dass der Luftführungskanal strömungstechnisch an eine Lufteinlassöffnung angeschlossen ist. Dies gestattet es, in die im Luftführungskreislauf umgewälzte Luft Frischluft von außen einführen zu können. Dies erlaubt eine zusätzliche Steuerung der Feuchte der im Luftführungskreislauf umgewälzten Luft.

Gemäß einem weiteren Merkmal der Erfindung ist vorgesehen, dass der Luftführungskreislauf strömungstechnisch an eine Luftauslassöffnung angeschlossen ist. Es ist so in Kombination mit der Lufteinlassöffnung ein Bypass-System vorgeschlagen, das es ermöglicht, wahlweise Frischluft von außen in den Luftführungskanal einströmen zu lassen bzw. im Luftführungskreislauf umgewälzte Luft nach außen in die die Geschirrspülmaschine umgebende Atmosphäre zu entlassen. Ein solches Bypass-System ist insbesondere von Vorteil, um nach einer automatischen Spülraumtüröffnung aus dem Spülraum austretende Brüden zu verdünnen und/oder beschleunigt in die die Geschirrspülmaschine umgebende Atmosphäre zu überführen und/oder eine die Geschirrspülmaschine frontseitig überstehende Arbeitsplatte vor- und/oder anzuwärmen.

Gemäß einem weiteren Merkmal der Erfindung ist vorgesehen, dass die Lufteinlassöffnung und/oder die Luftauslassöffnung jeweils mittels eines Verschlussmittels aus einer geöffneten Stellung in eine verschlossene Stellung und umgekehrt überführbar sind. Dies ermöglicht es, Luft entweder im Luftführungskreislauf umzuwälzen und/oder wahlweise Frischluft in den Luftführungskreislauf einzuführen bzw. Luft aus diesem heraus in die die Geschirrspülmaschine umgebende Atmosphäre abzulassen.

Dabei erfolgt ein Verschluss der Lufteinlassöffnung und/oder der Luftauslassöffnung mittels entsprechender Verschlussmittel, die vorzugsweise sensorgesteuert motorisch verfahren werden. Es ist so ein vollautomatischer Betrieb der Verschlussmittel gestattet und dies vorzugsweise in Abhängigkeit des Fortschritts eines laufenden Spülprogramms.

Mit der Erfindung wird zur **Lösung** der vorstehenden Aufgabe ferner vorgeschlagen ein Verfahren zum Betrieb einer Geschirrspülmaschine der erfindungsgemäßen Art, bei dem mit Beginn einer Spülguttrocknung die Ventilatoreinheit eingeschaltet und Luft durch den Luftführungskanal geführt wird.

Verfahrensseitig ist mithin vorgesehen, dass mit Beginn einer Spülguttrocknung der noch vergleichsweise warme Spülbehälter dazu genutzt wird, Wärmeenergie vom Spülbehälter auf die im Luftführungskreislauf umgewälzte Luft zu übertragen, so dass dann im Weiteren in schon vorbeschriebener Weise eine Aufheizung des Tanks der Wärmepumpeneinrichtung mit dem Ziel erfolgen kann, das darin bevorratete Wasser möglichst zügig zu regenerieren. Damit wird ein Teil der zuvor durch Aufheizung der Spülflotte eingesetzten Wärmeenergie zurückgewonnen.

Verfahrensseitig ist des Weiteren vorgesehen, dass der Umluftbetrieb, also die Führung der Luft durch den Luftführungskreislauf auch nach Abschluss eines Spülprogramms weiter betrieben wird. Dieser Weiterbetrieb ist deshalb von Vorteil, weil ein Spülprogramm regelmäßig bereits dann bestimmungsgemäß zu einem Abschluss gebracht werden kann, wenn das sich im Spülraum befindliche Spülgut noch warm ist, zumindest wärmer als die die Geschirrspülmaschine umgebende Raumluft. Die insoweit im noch aufheizten Spülgut bzw. im aufgeheizten Spülbehälter noch befindliche Wärmeenergie würde ungenutzt bleiben, wenn mit Ende eines Spülprogramms auch der Umluftbetrieb gestoppt würde. Es ist deshalb erfindungsgemäß vorgesehen, dass die Ventilatoreinheit auch nach Abschluss eines Spülprogramms weiter betrieben wird, um auch noch diese im System befindliche Restwärmemenge nutzen zu können.

Gemäß einem weiteren Verfahrensmerkmal ist vorgesehen, dass die Ventilatoreinheit auch nach einem automatischen Öffnen einer eine Beschickungsöffnung des Spülbehälters verschließenden Spülraumtür weiterbetrieben wird. Dies gestattet es in schon vorbeschriebener Weise, aus einem Spülbehälter austretende Brüden zu verdünnen und/oder eine frontseitig der Geschirrspülmaschine überstehende Arbeitsplatte einer Küchenzeile unterseitig vor einem Öffnen der Spülraumtür vor- und/oder anzuwärmen.

Gemäß einem weiteren Merkmal der Erfindung ist die Ventilatoreinheit drehzahlregelbar ausgebildet. Insbesondere kann die Drehzahl der Ventilatoreinheit von der Steuerung der Geschirrspülmaschine abhängig von einem oder mehreren sensorisch erfassten Werten eines den Luftstrom im Luftführungskreislauf und/oder die Wärmepumpeneinrichtung und/oder das im Tank befindliche Wasser und/oder das im Spülbehälter befindliche Wasser charakterisierenden Parameters eingestellt bzw. geregelt werden. Insbesondere kann die Drehzahlregelung beispielsweise abhängig von der Geschwindigkeit des Luftstroms, der Temperatur der Luft im Luftstrom, der Temperatur des vom Tank bevorrateten Wassers und/oder einer Wasser- oder Lufttemperatur im Sammeltopf erfolgen.

Eine erfindungsgemäße Umluftführung bietet insgesamt den Vorteil eines verringerten Verschmutzungsrisikos im Vergleich zu einem Ansaugen von Frischluft aus der Umgebung. Zudem wird eine Verbesserung des Wärmestroms durch das Umströmen des gesamten Verdampfertanks erreicht, wodurch sich die Regenerationszeit insgesamt verkürzen lässt. Zudem ist es in vorteilhafter Weise möglich, die Drehzahl der Ventilatoreinheit zu steuern, beispielsweise in Abhängigkeit von sensorisch erfassten Betriebsparametern, wie zum Beispiel Temperatur der umgewälzten Luft, Temperatur der Umgebungsluft, Temperatur des im Tank bevorrateten Wassers, Füllstand des im Tank bevorrateten Wassers, Luftströmungsgeschwindigkeit und/oder dgl. Dies gestattet einen optimierten Verfahrensablauf mit dem Ziel einer optimierten Wärmeübertragung in das vom Tank bevorratete Wasser, so dass eine im Vergleich zum Stand der Technik signifikant verkürzte Regenerationszeit erreicht ist.

Weitere Vorteile und Merkmale der Erfindung ergeben sich aus der nachfolgenden Beschreibung anhand der Figuren. Dabei zeigen
- Fig. 1: in schematischer Darstellung eine erfindungsgemäße Geschirrspülmaschine;
- Fig. 2: in schematischer Ansicht die Funktionsweise der erfindungsgemäßen Geschirrspülmaschine gemäß einer ersten Ausführungsform;
- Fig. 3: in schematischer Ansicht die Funktionsweise der erfindungsgemäßen Geschirrspülmaschine gemäß einer zweiten Ausführungsform;
- Fig. 4: in einer Ausschnittsdarstellung die erfindungsgemäße Geschirrspülmaschine gemäß einer weitere Ausführungsform
- Fig. 5: in einer schematischen Darstellung die Luftführung um den Spülbehälter der erfindungsgemäßen Geschirrspülmaschine herum und
- Fig. 6: in schematischer Ansicht die Funktionsweise der erfindungsgemäßen Geschirrspülmaschine gemäß einer dritten Ausführungsform.

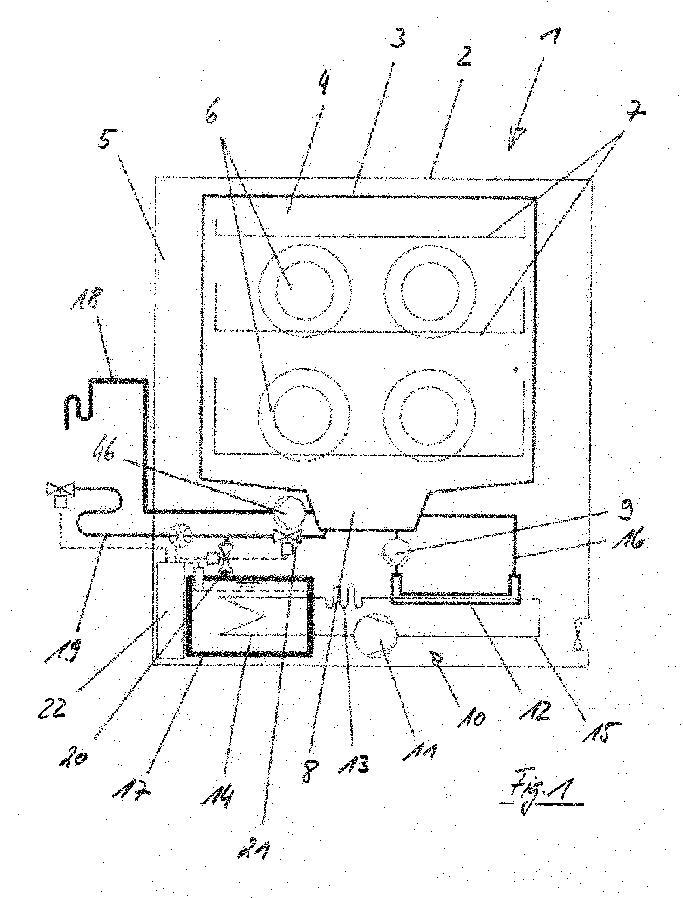

Fig. 1 lässt in rein schematischer Darstellung eine Geschirrspülmaschine 1 nach der Erfindung erkennen.

Die Geschirrspülmaschine 1 verfügt in an sich bekannter Weise über ein Gehäuse 2, das einen Volumenraum 5 bereitstellt und unter anderem einen Spülbehälter 3 sowie eine Wärmepumpeneinrichtung 10 beherbergt.

Der Spülbehälter 3 stellt seinerseits einen Spülraum 4 bereit, der im bestimmungsgemäßen Verwendungsfall der Aufnahme von zu reinigendem Spülgut 6 dient.

Zur Beschickung von zu reinigendem Spülgut 6 mit Spülflotte dient eine in den Figuren nicht näher dargestellte Sprüheinrichtung, die innerhalb des Spülbehälters 3 angeordnet ist. Bevorzugterweise verfügt eine solche Sprüheinrichtung über Sprüharme, die jeweils verdrehbar innerhalb des Spülbehälters 3 angeordnet sind.

Im gezeigten Ausführungsbeispiel dienen zur Aufnahme des zu reinigenden Spülguts 6 Spülkörbe 7, wobei drei solcher Spülkörbe 7 vorgesehen sind.

Der Spülraum 4 mündet in einen im Detail nicht näher dargestellten Sammeltopf 8 des Spülbehälters 3 ein, an den eine Umwälzpumpe 9 strömungstechnisch angeschlossen ist. Über entsprechende und in der Figur nicht näher dargestellte Versorgungsleitungen ist die in den Figuren ebenfalls nicht dargestellte Sprüheinrichtung an die Umwälzpumpe 9 strömungstechnisch angeschlossen. Im bestimmungsgemäßen Verwendungsfall kann damit eine Beschickung der Sprüheinrichtung mit Spülflotte mittels der Umwälzpumpe 9 stattfinden.

Die vom Gehäuse 2 beherbergte Wärmepumpeneinrichtung 10 weist einen Verdichter 11, einen Verflüssiger 12, ein Expansionsorgan in Form einer Drossel 13, einen Verdampfer 14 sowie einen diese Baukomponenten strömungstechnisch miteinander verbindenden Strömungskreislauf 15 auf, in dem ein Arbeitsmedium im Umwälzbetrieb geführt ist.

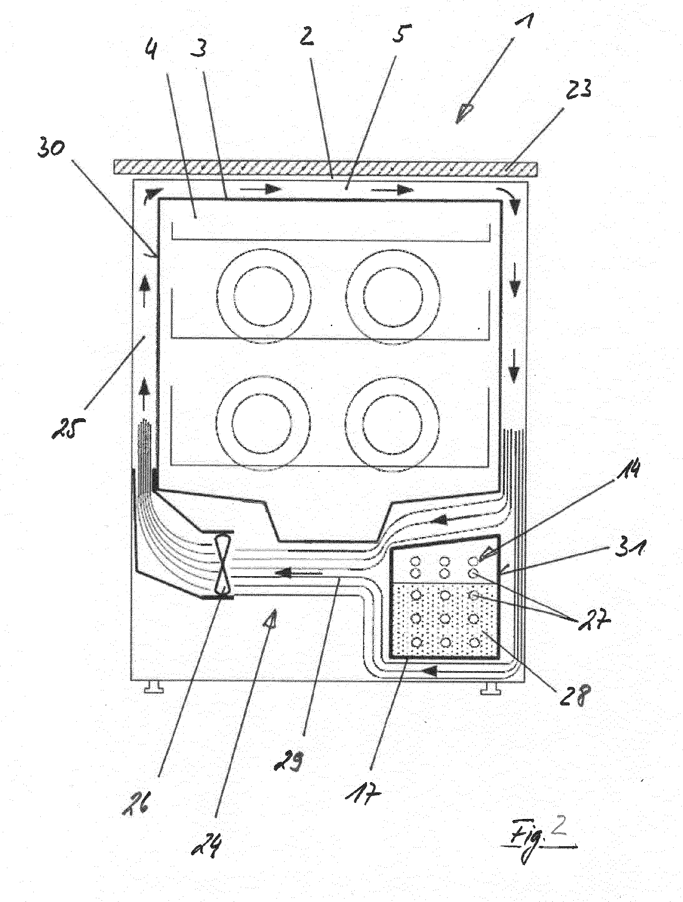

Der Verdampfer 14 ist innerhalb eines Tanks 17 angeordnet, der mit Wasser 28 (Fig. 2) als Wärmeträgermedium befüllt ist.

Im bestimmungsgemäßen Verwendungsfall der Wärmepumpeneinrichtung 10 findet mit Hilfe des Verflüssigers 12 ein Wärmeübertrag von dem im Strömungskreislauf 15 der Wärmepumpeneinrichtung 10 geführten Arbeitsmedium auf die Spülflotte statt. Zu diesem Zweck ist ein an die Umwälzpumpe 9 angeschlossener Strömungskreislauf 16 vorgesehen, der der Spülflottenumwälzung dient. Die im Betriebsfall im Verflüssiger 12 durch Verflüssigung des Arbeitsmediums freiwerdende Wärmeenergie wird mithin auf die im Strömungskreislauf 16 umgewälzte Spülflotte übertragen, zu welchem Zweck ein entsprechend ausgebildeter Wärmetauscher vorgesehen ist.

Wie Fig. 1 ferner erkennen lässt, ist der Sammeltopf 8 ferner unter Zwischenschaltung einer Abwasserpumpe 17 an eine Abwasserleitung 18 angeschlossen. Verbrauchte und nicht mehr benötigte Spülflüssigkeit kann so abgepumpt und über die Abwasserleitung 18 verworfen werden.

Es ist des Weiteren in an sich bekannter Weise eine Frischwasserleitung 19 vorgesehen, die unter Zwischenschaltung entsprechender Ventile 20 und 21 an den Sammeltopf 8 einerseits und den Tank 17 der Wärmepumpeneinrichtung 10 andererseits strömungstechnisch angeschlossen ist. Zur Steuerung des Frischwasserzulaufs und/oder der Ventile 20 und/oder 21 ist des Weiteren eine Steuerung 22 vorgesehen, die mit den Ventilen in kommunikationstechnischer Verbindung steht.

Wie sich insbesondere aus einer Zusammenschau der Figuren 2 bis 6 ergibt, verfügt die erfindungsgemäße Geschirrspülmaschine 1 über ein Umluftsystem 24. Dieses weist einen Luftführungskreislauf 25 und eine innerhalb des Luftführungskreislaufes 25 angeordnete Ventilatoreinheit 26 auf. Dabei ist der Luftführungskreislauf 25 an einer Außenoberfläche 30 des Spülbehälters 3 einerseits als auch an einer Außenoberfläche 31 des Tanks 17 andererseits vorbeigeführt, und zwar zumindest abschnittsweise. Damit sind der Spülbehälter 3 und der Tank 17 im Betriebsfall der Ventilatoreinheit 26 zumindest abschnittsweise luftumspült, wobei innerhalb des Luftführungskreislaufes 25 ein Luftstrom 29 umgewälzt wird, wie dies die in den Figuren eingezeichneten Pfeile symbolisieren.

Der im Luftführungskreislauf 25 umgewälzte Luftstrom 29 steht in unmittelbarem Kontakt mit den Außenoberflächen 30 und 31 des Spülbehälters 3 und des Tanks 17, so dass über die jeweiligen Außenoberflächen 30 bzw. 31 als jeweilige Wärmetauscherflächen ein Wärmeübertrag in die umgewälzte Luft bzw. aus der umgewälzten Luft heraus stattfinden kann.

Der im Tank 17 angeordnete Verdampfer 14 verfügt über eine Rohrschlange, wobei die Querschnittsdarstellung nach Fig. 2 die einzelnen Verdampferrohrabschnitte 27 erkennen lässt. Zumindest einiger dieser Verdampferrohrabschnitte 27 sind innerhalb des vom Tank 17 bevorrateten Wassers 28 angeordnet. Im bestimmungsgemäßen Verwendungsfall kommt es zu einem Wärmeübertrag aus dem vom Tank 17 bevorrateten Wasser 28 auf das durch den Verdampfer 14 hindurchgeführte Arbeitsmedium, was zu einem Abkühlen des Wasser 28 bis hin zu dessen Vereisung führt. Für eine beschleunigte Regeneration des Tanks 17, d.h. für eine beschleunigte Erwärmung des vom Tank 17 bevorrateten Wassers 28 auf eine für einen bestimmungsgemäßen Betrieb der Wärmepumpeneinrichtung 10 erforderliche Mindesttemperatur wird bevorzugterweise mit Beginn einer Spülguttrocknung die Ventilatoreinheit 26 eingeschaltet und Luft als Luftstrom 29 durch den Luftführungskreislauf 25 in Entsprechung der in den Figuren eingezeichneten Pfeile geführt.

Diese Luftumwälzung sorgt dafür, dass die umgewälzte Luft an dem noch warmen Spülbehälter 3 vorbeiströmt und hier Wärmeenergie aufnimmt. Die um den Spülbehälter 3 herumgeführte und warme Luft gelangt alsdann zum Tank 17, der bevorzugterweise vollflächig umströmt innerhalb des Luftführungskreislaufes 25 angeordnet ist. Hier findet ein Übertrag von der warmen umgewälzten Luft auf den Tank 17 und damit auch auf das vom Tank 17 bevorratete Wasser 28 statt.

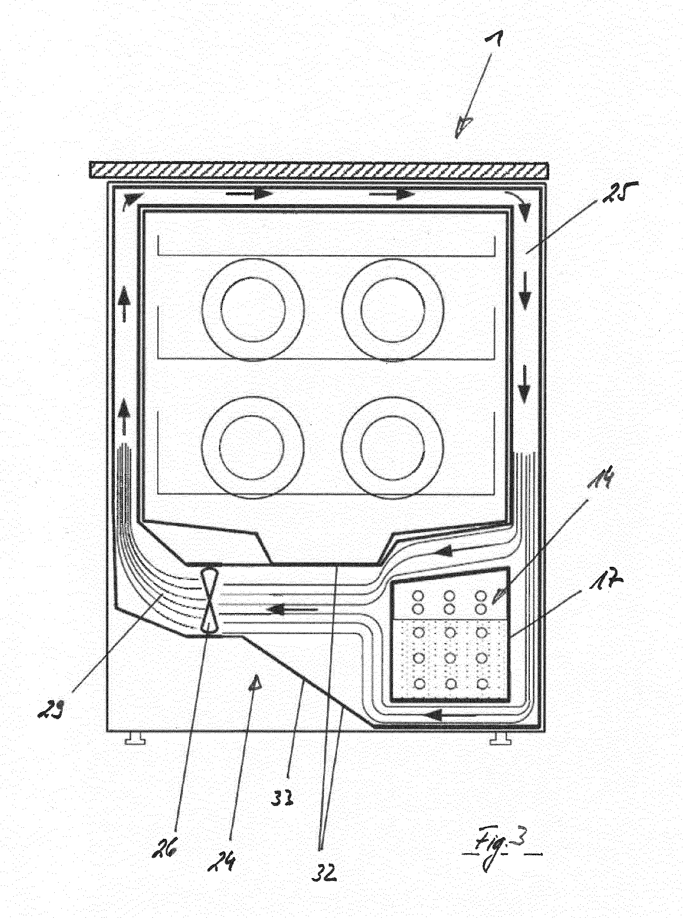

Für eine optimierte Führung der Luft innerhalb des Luftführungskreislaufes 25 insbesondere im Bereich des Sockels der Geschirrspülmaschine 1 können Luftführungsmittel 32 in Form von Blechen oder Kunststoffprofilen vorgesehen sein, die einen Luftführungskanal 33 bilden, wie dies die Ausführungsform nach Fig. 3 zeigt.

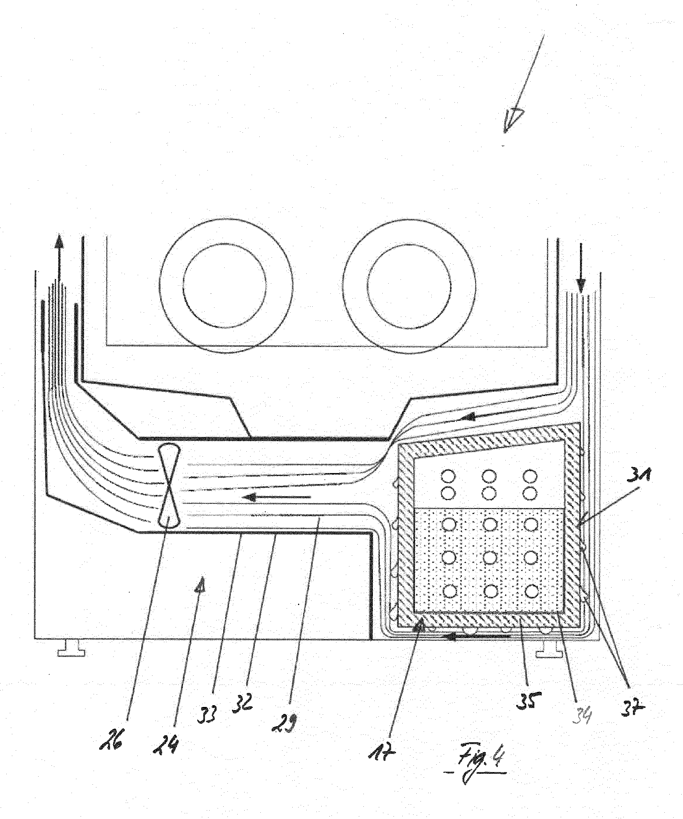

Um die Kondensatbildung an der Außenoberfläche 31 des Tanks 17 zu minimieren, kann dieser mit einer Dämmung 35 ausgerüstet sein, wie dies die Ausführungsform nach Fig. 4 erkennen lässt. Gemäß dieser Ausführungsform verfügt der Tank 17 über einen Behälter 34, der der eigentlichen Beherbergung des Wassers 28 dient, und einer behälteraußenseitig ausgebildeten Dämmung 35.

Das erfindungsgemäße Umluftsystem ist auch bei einem solchen wärmegedämmten Tank 17 vorteilhaft. Die Wärmedämmung soll eine unkontrollierte Betauung des Tanks 17 verhindern. Je dicker die Dämmung, desto besser die Wirkung. Aus Bauraumgründen ist die maximal mögliche Dämmstärke jedoch begrenzt. Aus diesem Grund kann es auch bei einer Wärmedämmung des Tanks 17 bei besonders kritischen Klima trotzdem zu einer unerwünschten Betauung und Bildung von Kondensat 37 kommen. Ohne aktive Maßnahmen würde diese Betauung an Bereichen mit geringen Spaltmaßen nur schlecht bis gar nicht abtrocknen. Durch die im Umwälzbetrieb durch den Luftführungskreislauf 25 geführte Luftströmung 29 wird die Verdunstung des Kondensats 37 ermöglicht bzw. deutlich beschleunigt.

Ein weiterer Vorteil des erfindungsgemäßen Umluftbetriebs ist die Temperaturerhöhung an den Außenoberflächen der Geschirrspülmaschine 1. Durch den bauraumbedingten geringen Abstand des wärmegedämmten Tanks 17 kann es im ungünstigsten Fall durch an der Außenseite des Gehäuses 2 zu einer Unterschreitung der Tautemperatur kommen. Durch den Umluftbetrieb kann die Oberflächentemperatur deutlich erhöht werden und hierdurch eine Betauung der Gehäuseaußenoberfläche vermieden werden. Diese Wirkung ist an der Bodenwanne besonders vorteilhaft. Sind beispielsweise die Gerätefüße komplett eingedreht, entsteht hierdurch ein kleiner Spalt zwischen der Unterseite der Bodenwanne und dem Aufstellboden, in welchem Spalt etwaiges Kondensat nur sehr langsam abtrocknen würde.

Es ist zudem bevorzugt, die Ventilatoreinheit 26 mit einem drehzahlregelbaren Gebläse auszustatten. In Abhängigkeit von zum Beispiel sensierbaren Temperaturen und/oder Feuchte kann die Drehzahl der Ventilatoreinheit 26 entsprechend angepasst werden. Dabei ist eine variable Drehzahl sowohl für den reinen Umluftbetrieb als auch für einen im Weiteren noch beschriebenen Bypassbetrieb von Vorteil.

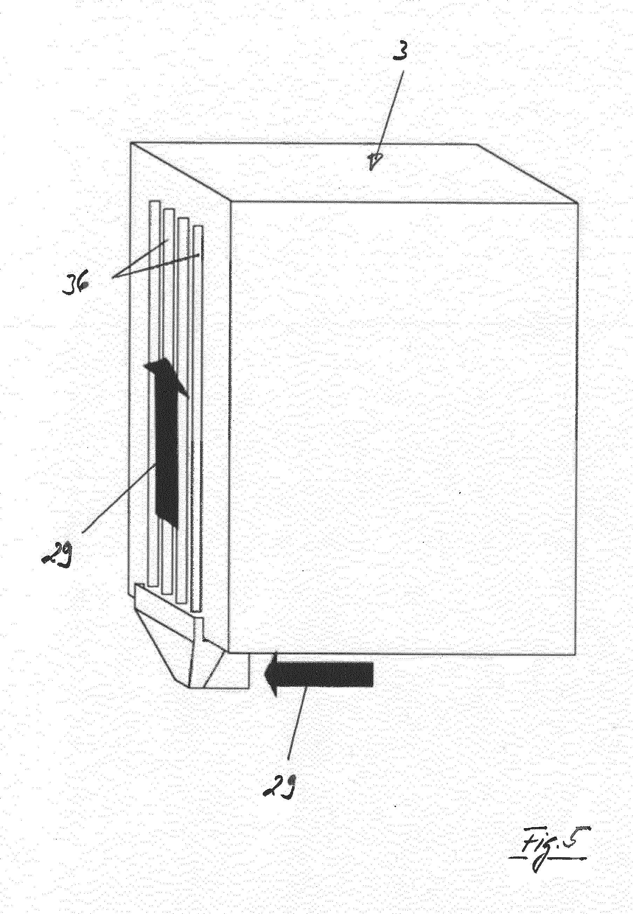

Um eine möglichst große Wärmeübertragungsfläche zwischen dem Spülbehälter 3 und einem umgewälzten Luftstrom 29 bereitzustellen, ist es bevorzugt, den Spülbehälter 3 außenseitig, zumindest an einer Seitenwand oder der Rückwand, entlang welcher der Luftführungskreislauf 25 entlanggeführt ist, mit Rippen 36 auszurüsten. Diese Ausführungsform ist in Fig. 5 schematisch dargestellt.

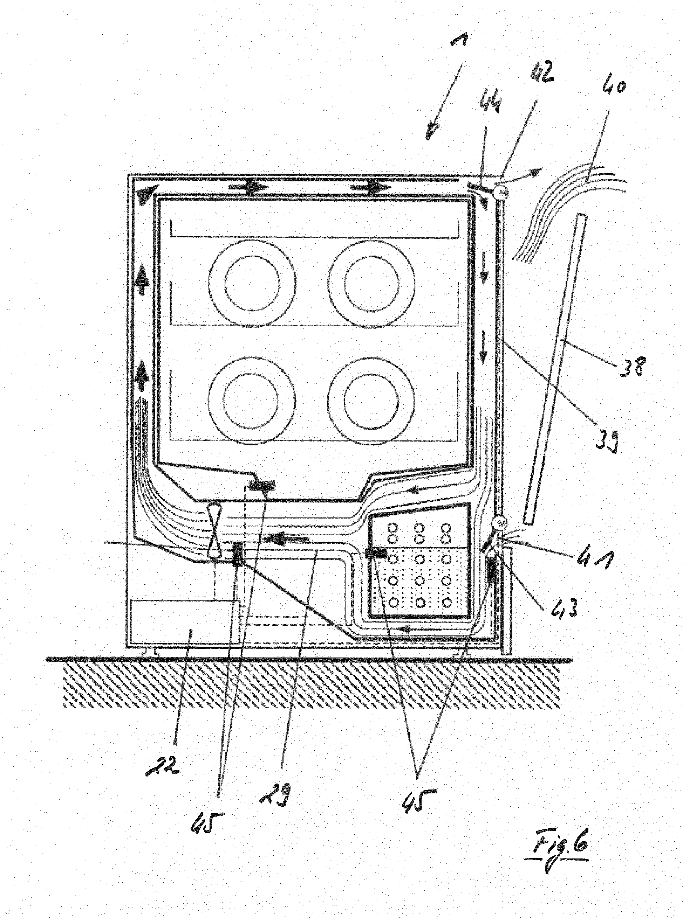

Gemäß der Ausführungsalternative nach Fig. 6 ist der Luftführungskreislauf 25 an eine Lufteinlassöffnung 41 und eine Luftauslassöffnung 42 jeweils strömungstechnisch angeschlossen. Diese Öffnungen 42 bzw. 42 sind durch entsprechende Verschlussmittel 43 bzw. 44 aus einer geöffneten Stellung in eine verschlossene Stellung und umgekehrt überführbar. Dabei ermöglicht ein Öffnen der Öffnungen 41 und 42, wie dies in Fig. 6 dargestellt ist, ein Bypass-System. Gemäß diesem Bypass-System kann über die Lufteinlassöffnung 41 Frischluft von außen in den Luftführungskreislauf 25 einströmen. Andererseits kann über die Luftauslassöffnung 42 aus dem Luftströmungskreislauf 25 stammende Luft nach außen in die die Geschirrspülmaschine 1 umgebende Atmosphäre abgegeben werden. Dies ermöglicht es beispielsweise, bei geöffneter Spülraumtür 38 aus der Beschickungsöffnung 39 austretende Brüden 40 zu verdünnen. Ferner ist es möglich, bei noch geschlossener Spülraumtür 38 eine oberhalb des Gehäuses 2 angeordnete Abdeckung in Form beispielsweise einer Arbeitsplatte 23 unterseitig vorwärmen zu können.

Wie die Ausführungsform nach Fig. 6 ferner erkennen lässt, können zahlreiche Sensoren 45 vorgesehen sein, die an die Steuerung 22 kommunikationstechnisch angeschlossen sind. Mittels dieser Sensoren 45 kann beispielsweise die Geschwindigkeit des Luftstroms 29, die Temperatur der Luft im Luftstrom 29, die Temperatur des vom Tank 17 bevorrateten Wassers 28, der Füllstand im Sammeltopf 8 und/oder der dgl. erfasst werden. In Abhängigkeit dieser sensorisch erfassten Werte ist ein Betrieb der Ventilatoreinheit 26 möglich, so dass in Abhängigkeit der erfassten Istzustände eine Drehzahlregelung der Ventilatoreinheit 26 erfolgt. Ein zur Erwärmung des Wassers 28 optimierter Luftstrom 29 kann so erzeug werden.

### Bezugszeichen

- 1: Geschirrspülmaschine
- 2: Gehäuse
- 3: Spülbehälter
- 4: Spülraum
- 5: Volumenraum
- 6: Spülgut
- 7: Spülkorb
- 8: Sammeltopf
- 9: Umwälzpumpe
- 10: Wärmepumpeneinrichtung
- 11: Verdichter
- 12: Verflüssiger
- 13: Drossel
- 14: Verdampfer
- 15: Strömungskreislauf (Wärmepumpeneinrichtung)
- 16: Strömungskreislauf (Spülflotte)
- 17: Tank
- 18: Abwasserleitung
- 19: Frischwasserleitung
- 20: Ventil
- 21: Ventil
- 22: Steuerung
- 23: Abdeckung (Arbeitsplatte)
- 24: Umluftsystem
- 25: Luftführungskreislauf
- 26: Ventilatoreinheit
- 27: Verdampferrohrabschnitt
- 28: Wasser
- 29: Luftstrom
- 30: Außenoberfläche (Spülbehälter)
- 31: Außenoberfläche (Tank)
- 32: Luftführungsmittel
- 33: Kanal
- 34: Behälter
- 35: Dämmung
- 36: Rippe
- 37: Kondensat
- 38: Spülraumtür
- 39: Beschickungsöffnung
- 40: Brüden
- 41: Lufteinlassöffnung
- 42: Luftauslassöffnung
- 43: Verschlussmittel
- 44: Verschlussmittel
- 45: Sensor
- 46: Pumpe

## Patentansprüche

1. Geschirrspülmaschine, insbesondere Haushaltsgeschirrspülmaschine, mit einem einen Spülraum (4) bereitstellenden Spülbehälter (3), der der Aufnahme von zu reinigendem Spülgut (6) dient, mit einer Wärmepumpeneinrichtung (10), die einen Verdampfer (14) aufweist, der innerhalb eines mit Wasser (28) befüllten Tanks (17) angeordnet ist, und mit einem Umluftsystem (24), das einen Luftführungskreislauf (25) und eine innerhalb des Luftführungskreislaufes (25) angeordnete Ventilatoreinheit (26) aufweist, **dadurch gekennzeichnet, dass** der Luftführungskreislauf (25) an einer Außenoberfläche (30, 31) sowohl des Spülbehälters (3) als auch des Tanks (17) zumindest abschnittsweise vorbeigeführt ist, so dass im Betriebsfall der Ventilatoreinheit (26) der Spülbehälter (3) und der Tank (17) zumindest abschnittsweise luftumspült sind, wobei die im Luftführungskreislauf (25) geführte Luft in unmittelbarem Kontakt mit den Außenoberflächen (30, 31) des Spülbehälters (3) und des Tanks (17) steht.

2. Geschirrspülmaschine nach Anspruch 1,
**dadurch gekennzeichnet, dass**
der Luftführungskreislauf (25) zumindest teilweise durch ein den Spülbehälter (3) und den Tank (17) beherbergendes Gehäuse (2) begrenzt ist.

3. Geschirrspülmaschine nach Anspruch 1 oder 2,
**dadurch gekennzeichnet, dass**
der Luftführungskreislauf (25) den Spülbehälter (3) umlaufend umgibt.

4. Geschirrspülmaschine nach einem der vorhergehenden Ansprüche,
**dadurch gekennzeichnet, dass** der Luftführungskreislauf (25) den Tank (17) umlaufend umgibt.

5. Geschirrspülmaschine nach einem der vorhergehenden Ansprüche,
**dadurch gekennzeichnet, dass**
der Tank (17) vollflächig luftumspült innerhalb des Luftführungskreislaufes (25) angeordnet ist.

6. Geschirrspülmaschine nach einem der vorhergehenden Ansprüche,
**dadurch gekennzeichnet, dass**
der Tank (17) einen Behälter (34) und eine behälteraußenseitig ausgebildete Dämmung (35) aufweist, wobei die Dämmung (35) die Außenoberfläche (31) des Tanks (17) bereitstellt.

7. Geschirrspülmaschine nach einem der vorhergehenden Ansprüche,
**dadurch gekennzeichnet, dass**
der Luftführungskreislauf (25) zumindest abschnittsweise durch Luftführungsmittel (32), insbesondere Bleche, begrenzt ist.

8. Geschirrspülmaschine nach einem der vorhergehenden Ansprüche,
**dadurch gekennzeichnet, dass**
der Spülbehälter (3) außenseitig in den Luftführungskreislauf (25) hineinragende Rippen (36) trägt.

9. Geschirrspülmaschine nach einem der vorhergehenden Ansprüche,
**dadurch gekennzeichnet, dass**
der Luftführungskreislauf (25) an eine Lufteinlassöffnung (41) strömungstechnisch angeschlossen ist.

10. Geschirrspülmaschine nach einem der vorhergehenden Ansprüche,
**dadurch gekennzeichnet, dass**
der Luftführungskreislauf (25) an eine Luftauslassöffnung (42) strömungstechnisch angeschlossen ist.

11. Geschirrspülmaschine nach Anspruch 9 oder 10,
**dadurch gekennzeichnet, dass**
die Lufteinlassöffnung (41) und/oder die Luftauslassöffnung (42) jeweils mittels eines Verschlussmittels (43, 44) aus einer geöffneten Stellung in eine verschlossene Stellung und umgekehrt überführbar sind.

12. Verfahren zum Betrieb einer Geschirrspülmaschine nach einem der vorhergehenden Ansprüche 1 bis 11, bei dem mit Beginn einer Spülguttrocknung die Ventilatoreinheit (26) eingeschaltet und Luft durch den Luftführungskreislauf (25) geführt wird.

13. Verfahren nach Anspruch 12,
**dadurch gekennzeichnet, dass**
die Ventilatoreinheit (26) auch nach Abschluss eines Spülprogramms weiter betrieben wird.

14. Verfahren nach Anspruch 12 oder 13,
**dadurch gekennzeichnet, dass**
die Ventilatoreinheit (26) auch nach einem automatischen Öffnen einer eine Beschickungsöffnung (39) des Spülbehälters (3) verschließenden Spülraumtür (38) weiterbetrieben wird.

15. Verfahren nach einem der Ansprüche 12 bis 14,
**dadurch gekennzeichnet, dass**
die Drehzahl der Ventilatoreinheit (26) abhängig von einem oder mehreren sensorisch erfassten Werten eines den Luftstrom im Luftführungskreislauf (25) und/oder die Wärmepumpeneinrichtung (10) und/oder das im Tank befindliche Wasser und/oder das im Spülbehälter befindliche Wasser charakterisierenden Parameters eingestellt wird.

## Claims

1. Dishwasher, in particular a domestic dishwasher, comprising a washing container (3), which provides a washing chamber (4) and is used to hold washware (6) to be cleaned, comprising a heat pump device (10), which has an evaporator (14) that is arranged within a reservoir (17) filled with water (28), and comprising an air circulation system (24), which has an air guiding circuit (25) and a fan unit (26) arranged within the air guiding circuit (25), **characterised in that** the air guiding circuit (25) passes at least sections of an outer surface (30, 31) of both the washing container (3) and the reservoir (17) such that when the fan unit (26) is in operation, air flows around at least sections of the washing container (3) and the reservoir (17), the air guided in the air guiding circuit (25) being in direct contact with the outer surfaces (30, 31) of the washing container (3) and the reservoir (17).

2. Dishwasher according to claim 1,
**characterised in that**
the air guiding circuit (25) is at least partially delimited by a housing (2) accommodating the washing container (3) and the reservoir (17).

3. Dishwasher according to either claim 1 or claim 2,
**characterised in that**
the air guiding circuit (25) peripherally surrounds the washing container (3).

4. Dishwasher according to any of the preceding claims,
**characterized in that**
the air guiding circuit (25) peripherally surrounds the reservoir (17).

5. Dishwasher according to any of the preceding claims,
**characterised in that**
the reservoir (17) is arranged with air flowing over its entire surface within the air guiding circuit (25).

6. Dishwasher according to any of the preceding claims,
**characterised in that**
the reservoir (17) comprises a container (34) and insulation (35) formed on the outside of the container, the insulation (35) providing the outer surface (31) of the reservoir (17).

7. Dishwasher according to any of the preceding claims,
**characterised in that**
the air guiding circuit (25) is delimited at least in sections by air guiding means (32), in particular metal sheets.

8. Dishwasher according to any of the preceding claims,
**characterised in that**
the outside of the washing container (3) has fins (36), which project into the air guiding circuit (25).

9. Dishwasher according to any of the preceding claims,
**characterised in that**
the air guiding circuit (25) is fluidically connected to an air inlet opening (41).

10. Dishwasher according to any of the preceding claims,
**characterised in that**
the air guiding circuit (25) is fluidically connected to an air outlet opening (42).

11. Dishwasher according to either claim 9 or claim 10,
**characterised in that**
the air inlet opening (41) and/or the air outlet opening (42) can each be transferred from an open position into a closed position, and vice versa, by a closing means (43, 44).

12. Method for operating a dishwasher according to any of the preceding claims 1 to 11, in which the fan unit (26) is switched on at the start of the washware drying process and air is guided through the air guiding circuit (25).

13. Method according to claim 12,
**characterised in that**
the fan unit (26) continues to be operated even after the end of a washing program.

14. Method according to either claim 12 or claim 13,
**characterised in that**
the fan unit (26) continues to be operated even after a washing chamber door (38), which closes a loading opening (39) of the washing container (3), has been automatically opened.

15. Method according to any of claims 12 to 14,
**characterised in that**
the speed of the fan unit (26) is adjusted depending on one or more sensor-detected values of a parameter that characterises the air flow in the air guiding circuit (25) and/or the heat pump device (10) and/or the water in the reservoir and/or the water in the washing container.

## Revendications

1. Lave-vaisselle, en particulier lave-vaisselle domestique, comportant un récipient de lavage (3), fournissant un espace de lavage (4), lequel serve à recevoir des articles à laver (6), comportant un dispositif de pompe à chaleur (10), lequel comporte un évaporateur (14), lequel est disposé à l'intérieur d'un réservoir (17) rempli d'eau (28), et comportant un système de circulation d'air (24), lequel comporte un circuit de conduite d'air (25) et une unité de ventilateur (26) disposée à l'intérieur du circuit de conduite d'air (25), **caractérisé en ce que** le circuit de conduite d'air (25) passe, au moins par zones, sur une surface extérieure (30, 31) à la fois du récipient de lavage (3) et du réservoir (17) de telle sorte que, lorsque l'unité de ventilateur (26) est en mode de fonctionnement, le récipient de lavage (3) et le réservoir (17) sont balayés avec de l'air au moins par zones, dans lequel l'air guidé dans le circuit de conduite d'air (25) est en contact direct avec les surfaces extérieures (30, 31) du récipient de lavage (3) et du réservoir (17).

2. Lave-vaisselle selon la revendication 1,
**caractérisé en ce que**
le circuit de conduite d'air (25) est au moins partiellement délimité par un boîtier (2) recevant le récipient de lavage (3) et le réservoir (17).

3. Lave-vaisselle selon la revendication 1 ou 2,
**caractérisé en ce que**
le circuit de conduite d'air (25) entoure le récipient de lavage (3) circonférentiellement.

4. Lave-vaisselle selon l'une quelconque des revendications précédentes,
**caractérisé en ce que** le circuit de conduite d'air (25) entoure le réservoir (17) circonférentiellement.

5. Lave-vaisselle selon l'une quelconque des revendications précédentes,
**caractérisé en ce que**
le réservoir (17) est disposé avec de l'air le balayant sur toute sa surface à l'intérieur du circuit de conduite d'air (25).

6. Lave-vaisselle selon l'une quelconque des revendications précédentes,
**caractérisé en ce que**
le réservoir (17) comporte un récipient (34) et une isolation (35) formée côté extérieur du récipient, dans lequel l'isolation (35) fournie la surface extérieure (31) du réservoir (17).

7. Lave-vaisselle selon l'une quelconque des revendications précédentes,
**caractérisé en ce que**
le circuit de conduite d'air (25) est délimité, au moins par zones, par des moyens de conduite d'air (32), en particulier des tôles.

8. Lave-vaisselle selon l'une quelconque des revendications précédentes,
**caractérisé en ce que**
le récipient de lavage (3) supporte des nervures (36) faisant saillie dans le circuit de conduite d'air (25) côté extérieur.

9. Lave-vaisselle selon l'une quelconque des revendications précédentes,
**caractérisé en ce que**
le circuit de conduite d'air (25) est raccordé fluidiquement à une ouverture d'entrée d'air (41).

10. Lave-vaisselle selon l'une quelconque des revendications précédentes,
**caractérisé en ce que**
le circuit de conduite d'air (25) est raccordé fluidiquement à une ouverture de sortie d'air (42).

11. Lave-vaisselle selon la revendication 9 ou 10,
**caractérisé en ce que**
l'ouverture d'entrée d'air (41) et/ou l'ouverture de sortie d'air (42) peuvent respectivement passer d'une position ouverte à une position fermée et inversement au moyen d'un moyen de fermeture (43, 44).

12. Procédé permettant de faire fonctionner un lave-vaisselle selon l'une quelconque des revendications précédentes 1 à 11, dans lequel l'unité de ventilateur (26) est activée au début d'un séchage des articles à laver et de l'air est guidé à travers le circuit de conduite d'air (25).

13. Procédé selon la revendication 12,
**caractérisé en ce que**
l'unité de ventilateur (26) continue à fonctionner même après la fin d'un programme de lavage.

14. Procédé selon la revendication 12 ou 13,
**caractérisé en ce que**
l'unité de ventilateur (26) continue à fonctionner même après l'ouverture automatique d'une porte d'espace de lavage (38) fermant une ouverture de chargement (39) du récipient de lavage (3).

15. Procédé selon l'une quelconque des revendications 12 à 14,
**caractérisé en ce que**
la vitesse de l'unité de ventilateur (26) est réglée en fonction d'au moins une valeur détectée par un capteur d'un paramètre caractérisant un écoulement d'air dans le circuit de conduite d'air (25) et/ou dans le dispositif de pompe à chaleur (10) et/ou l'eau se trouvant dans le réservoir et/ou l'eau se trouvant dans le récipient de lavage.
